# EUROPEAN PATENT SPECIFICATION

(11) **EP 3 142 867 B1**
(45) Date of publication and mention of the grant of the patent: **29.04.2020**
(21) Application number: 14730709.4
(22) Date of filing: 16.05.2014
(51) Int. Cl.: B60B 9/26, B60C 7/18, B60C 7/14, B60B 27/06, B60B 9/10

(54) **NON-PNEUMATIC TIRE WITH PARTIALLY COMPLIANT HUB**
LUFTLOSER REIFEN MIT PARTIELL NACHGIEBIGER RADNABE
PNEU SANS AIR AVEC MOYEU DE ROUE PARTIELLEMENT ELASTIQUE

(43) Date of publication of application: 22.03.2017
(73) Proprietor: Compagnie Générale des Etablissements Michelin, 63000 Clermont-Ferrand (FR)
(72) Inventor: MILES, Kevin, C., Greenville, SC 29605 (US); CRON, Steven M., Greenville, SC 29605 (US)
(74) Representative: Casalonga
(86) International application number: PCT/US2014/038472
(87) International publication number: WO 2015/175003

(56) References cited:
- US-A- 3 188 775
- US-A1- 2011 011 506
- US-B1- 6 170 544

## Description

### FIELD OF THE INVENTION

The subject matter of the present invention relates to a compliant hub as may be used in a non-pneumatic wheel.

### BACKGROUND OF THE INVENTION

The details and benefits of non-pneumatic tire constructions are described e.g., in U.S. Pat. Nos. 6,769,465; 6,994,134; 7,013,939; and 7,201,194. Certain non-pneumatic tire constructions propose incorporating a shear band, embodiments of which are described in e.g., U.S. Pat. Nos. 6,769,465 and 7,201,194. Such non-pneumatic tires provide advantages in tire performance without relying upon a gas inflation pressure for support of the loads applied to the tire. A typical example of such non-pneumatic tires possess a central hub, an inner interface member joined to the central hub, a tread band to interface with the ground surface, an outer interface member joined to or integral with the tread band, and a plurality of web elements connecting the inner interface member to the outer interface member or tread band. Such a non-pneumatic tire with a hub portion is e.g. discloses in US 2011/0011506 A1.

Such non-pneumatic rims or hubs require a relatively thin mounting surface through which fasteners, such as lug bolts or studs, may pass to mount the tire to the vehicle and a relatively wide web element mounting surface to allow a more uniform deformation and stress distribution across the web elements. The hub, generally constructed of metal, may be constructed as two pieces, a vertical central portion and a substantially cylindrical piece or "can" which are fastened together, or cast as a single piece of a large mass of metal. The hub may represent a significant cost of the non-pneumatic tire.

Occasionally a non-pneumatic tire, like a pneumatic tire, experiences an impact event that exceeds a certain force causing undesired permanent damage. Such events may occur when encountering a curb or other obstacle at excessive speed. During such an event, sometimes referred to as a "pinch shock event" permanent plastic deformation or fracturing of the rim or damage to other wheel or tire components is possible.

Accordingly, a hub that can simplify and reduce the cost of construction while increasing durability of the wheel would be beneficial. Such a hub that can be incorporated into a variety of non-pneumatic tire constructions would be particularly useful.

### SUMMARY OF THE INVENTION

Aspects and advantages of the invention will be set forth in part in the following description, or may be obvious from the description, or may be learned through practice of the invention according to the appended claims.

In one exemplary embodiment, the present invention provides a partially compliant hub for securing a non-pneumatic structurally supported wheel having a disk shaped center portion and a toroidal shaped outer portion circumferentially placed about the periphery of said disk shaped center portion, where said center disk shaped center portion has a higher modulus of elasticity than the toroidal shaped outer portion.

In another exemplary embodiment, the partially compliant hub's disk shaped center portion is constructed of stamped steel.

In another exemplary embodiment, the partially compliant hub's disk shaped center portion is constructed of cast metal.

In another exemplary embodiment, the partially compliant hub's disk shaped center portion possesses a plurality of apertures circumferentially spaced near the periphery of the disk and the toroidal shaped outer portion

In another exemplary embodiment, a non-pneumatic structurally supported wheel comprises: a hub portion comprising a mounting disk possessing a generally circular outer periphery and an axially elongated toroidal structure securely mounted concentrically with the mounting disk and encapsulating said outer periphery of the mounting disk; a compliant load supporting band disposed radially outward and concentrically with said hub; a plurality of tension based web elements extending between said hub portion and said compliant load supporting band; wherein said mounting disk is constructed of a material that has a modulus of elasticity greater than the modulus of elasticity of the material used to construct said outer toroidal structure wherein said plurality of web elements and said toroidal structure are molded as a unitary structure.

These embodiments, and the embodiments that follow, allow for a less expensive partially compliant hub structure that is more resistant to plastic deformation, lighter weight, and results in a wheel structure that is even more compliant than a wheel having a rigid hub structure.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 provides a perspective view of an exemplary embodiment of a non-pneumatic tire as may incorporate a partially compliant hub of the present invention.
FIG. 2 provides a side view of the embodiment of the compliant hub as viewed from the side to which it is mounted to the vehicle.
FIG. 3 provides a radial section view of the tire of FIG. 2 as taken along line 3-3 in FIG. 2.
FIG. 4 is a radial section view of a portion of an exemplary embodiment of a compliant hub having a toroidal portion secured to an inner interface element.
FIG. 5 is a side view of the inside surface of the disk portion of the hub without the encapsulating toroidal portion.
FIG. 6 is a partial perspective view of a portion of an exemplary embodiment of a compliant hub having cut out portions and web portions extending radially.
FIG. 7 is a side view of an exemplary embodiment having web elements effectively shortened by bridging two adjacent web elements at the inner interface element or toroidal portion of the hub.

The use of identical or similar reference numerals in different figures denotes identical or similar features.

### DETAILED DESCRIPTION OF THE INVENTION

The present invention provides a partially compliant hub that may be used e.g., in a non-pneumatic tire. For purposes of describing the invention, reference now will be made in detail to embodiments and/or methods of the invention, one or more examples of which are illustrated in or with the drawings. Each example is provided by way of explanation of the invention, not limitation of the invention. In fact, it will be apparent to those skilled in the art that various modifications and variations can be made in the present invention without departing from the scope of the invention. For instance, features or steps illustrated or described as part of one embodiment, can be used with another embodiment or steps to yield a still further embodiments or methods. Thus, it is intended that the present invention covers such modifications and variations as come within the scope of the appended claims.

The following terms are defined as follows for this disclosure:

"Axial direction" or the letter "A" in the figures refers to a direction parallel to the axis of rotation of for example, the shear band, tire, and/or wheel as it travels along a road surface.

"Radial direction" or the letter "R" in the figures refers to a direction that is orthogonal to the axial direction and extends in the same direction as any radius that extends orthogonally from the axial direction.

"Equatorial plane" means a plane that passes perpendicular to the axis of rotation and bisects the shear band and/or wheel structure.

"Radial plane" means a plane that passes perpendicular to the equatorial plane and through the axis of rotation of the wheel.

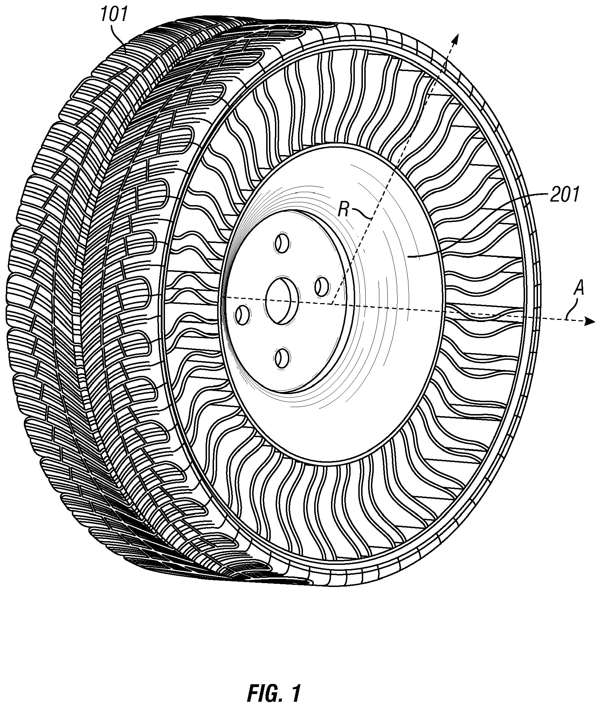

FIG. 1 provides an exemplary embodiment of a non-pneumatic tire 101 as may incorporate a partially compliant hub 201 of the present invention. The compliant hub 201 of the present embodiment allows for resistance to permanent deformation in an impact event by allowing elastic deformation during the event, and return to its original shape afterwards.

In a test performed using a pendulum impact device, for example, a conventional metal "can" hub was compared to a hub constructed in accordance with the invention disclosed and having a metal inner hub disk shaped portion having an outer periphery surrounded by a polyurethane toroid shaped outer hub portion. The conventional metal "can" hub plastically deformed after an impact having 1390 Joules and 6257 kilograms force while the hub constructed in accordance with the invention withstood 3426 Joules and 9471 kilograms force without plastic deformation.

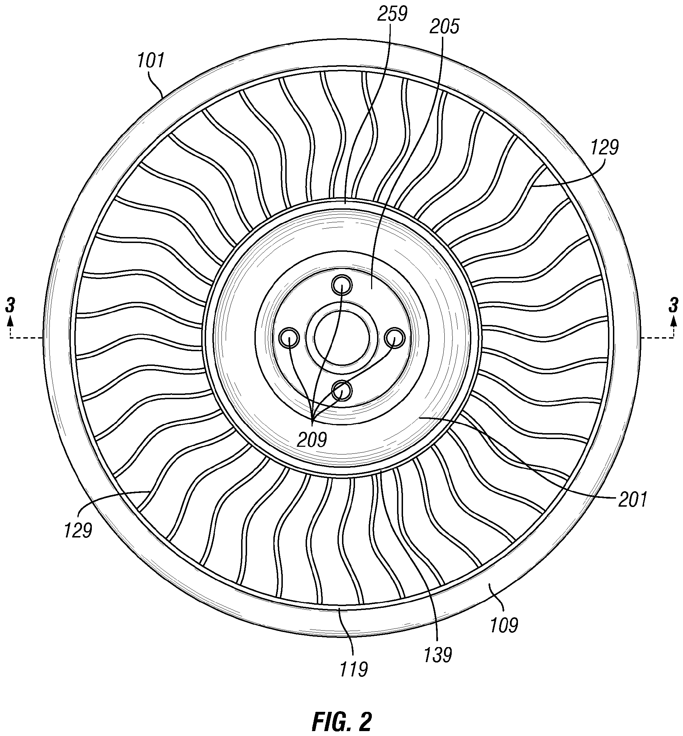

FIG. 2 provides a side view of the embodiment of the non-pneumatic tire 101. The embodiment shown possesses a tread band 109, an outer interface band 119, tension bearing web elements 129, an inner interface band 139, and an inner hub 201. A plurality of wheel hub fastener apertures 209 are shown placed in a circular pattern. Each wheel hub fastener aperture 209 allows a portion of a wheel hub fastener to pass through to secure the wheel to the vehicle. Generally, the wheel hub fastener is a threaded wheel stud which is secured on the outside of the hub 201 with a lug nut. Alternatively, the wheel hub fastener may be a wheel bolt passing through from the outside of the wheel into a threaded aperture on the vehicle. It should be understood that while these two fasteners represent two alternatives, any style fastener may be utilized with the invention. It should also be understood that the number and placement of the fastener apertures 209 may vary.

The hub 201 of the current embodiment is comprised of a center disk portion 205 and a relatively more flexible outer toroidal portion 259. The inner interface band 139 may be a separate component bonded to the outer surface of the outer toroidal portion 259 or the inner interface band 139 may be integral with outer toroidal portion 259 such as where the web elements 129, and outer cylindrical portion 259 are molded from a continuous mold cavity. In the case where the inner interface element is integral with the outer toroidal portion, the term "inner interface element" may be used to refer to the "outer toroidal portion" and vice versa.

The disk portion 205 of the hub 201 of the present embodiment is formed from a stamped sheet of metal, bent into a generally flat disk-like shape. It should be understood that the center disk portion 205 may also be cast or forged, and may be constructed from a material having a stiffness greater than that of the toroidal portion 259 which, in the present embodiment is constructed of a material having a lower stiffness than the disk portion 205. The toroidal portion 259 of the present embodiment possesses a toroidal shape which is elongated in the axial direction forming a generally cylindrical shape. The outer circumference of the center disk portion 205 is bonded to the outer toroidal portion 259.

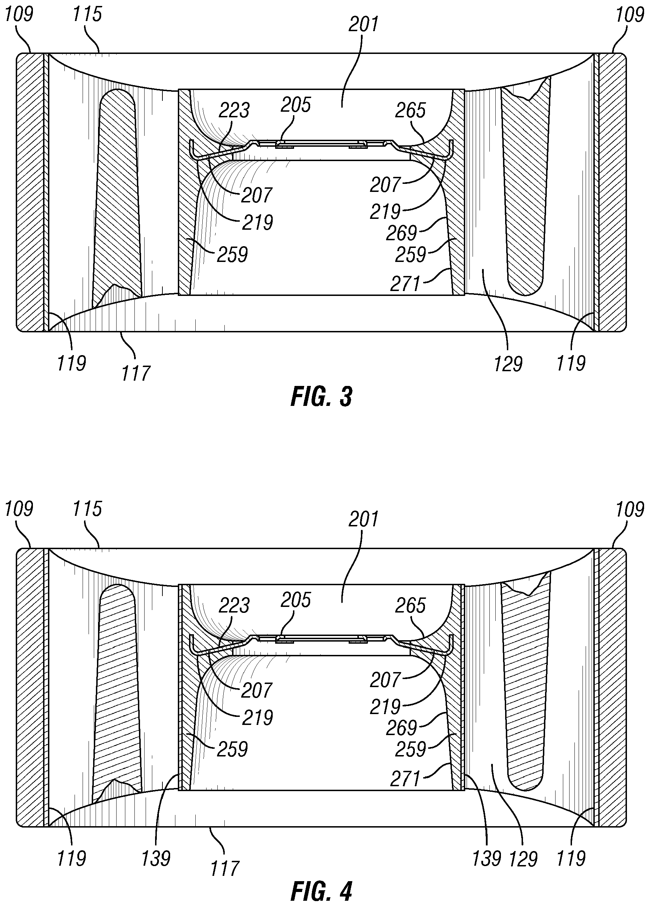

Figure 3 shows a cross-sectional view tire 201 taken along line 3-3 in FIG. 2. This view is perpendicular to the equatorial plane of the tire. The outer periphery 207 of the center disk portion 205 of the present embodiment is encapsulated by the toroidal portion 259 of the hub 201.

The disk portion 205 of the present embodiment 101 is positioned parallel with an equatorial plane of the tire. Disk portion 205 possesses bend 219 in the outer periphery 207 so that the outer portion is circumferentially bent approximately 90 degrees forming a lip around the outer circumference of the disk 205. The bend 219 exposes a larger surface area to the radial forces generated by the weight carried by the tire and allows for greater bonded surface area of the disk portion 205 to the toroidal portion 259.

The toroidal portion 259 of the present embodiment possesses a cross section with an inside concave curved portion 265 between the disk 205 and inside portion 115 of the wheel and an inner concave portion 269 transitioning to a sloped but flat portion 271 between the disk 205 and the outside portion 117 of the wheel. The sloped and concave portions 271, 269 and 265 create a tapering of the toroid away from the disk 205.

In the present embodiment, the web elements 129 and toroidal portion 259 are formed of the same material. In this embodiment, the disk portion 205 of the hub 201 and tread band 109 are positioned within a mold. An elastomeric material is then poured into the mold forming the outer interface band 119, web elements 129 and toroidal hub portion 259 as a unitary structure. The elastomeric material in the present embodiment may be any suitable elastomeric material such as a natural or synthetic rubber, polyurethane, foamed rubber and foamed polyurethane, segmented copolyesters and block co-polymers of nylon. Molding of the toroidal portion and web elements simplifies construction of the wheel and reduces cost, while allowing for a compliant composite hub particularly suited for a tension based non-pneumatic wheel. Cost savings and simplification of construction are evident by simplification of the construction of the hub by eliminating the need to construct a cylindrically shaped portion extending in the wheel's axial direction to support the load of the web elements.

Alternatively, the hub portion 201 is formed in a previous step by placing a center disk 205 within a mold, molding the toroidal portion 259, removing the hub 201 from the mold then placing the formed hub 201 and tread band 109 in a different mold and pouring an elastomeric material forming the outer interface band 119, web elements 129 and inner interface band 139. This alternative embodiment 103, as shown in Fig. 4, allows the designer to select a material having a different stiffness for the toroid portion 259 of the hub 201 than the outer interface band 119, web elements 129 and inner interface band 139. In this particular embodiment, the toroidal portion of the hub may be constructed a polymer including an elastomer, plastic, or composite, such as glass filled nylon. Thus the toroidal portion 259 of the hub 201 may have a different modulus than the material used to form the web elements 129.

It should be understood that in any of the embodiments herein the outer interface band 119 may possess reinforcing elements, such as metallic cords or natural or synthetic cords or textiles, or the tread band 109 may possess reinforcing elements, or some combination of both the interface element 119 and tread band 109 possessing reinforcing elements such as metallic cords or natural or synthetic cords or textiles.

In yet another embodiment, the tread band may be omitted and the outer interface band may serve functionally as a tread band, possessing both reinforcing elements and interfacing with the surface on which the wheel operates.

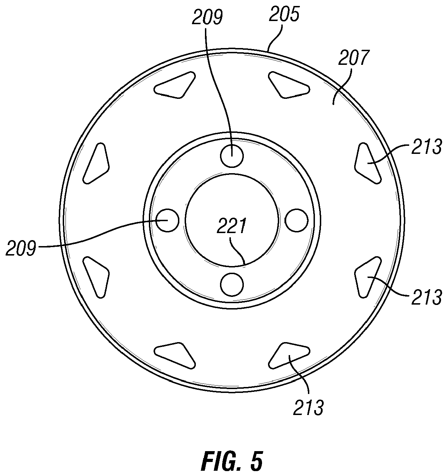

Fig. 5 shows a view of the inside surface 223 of the disk 205 portion of the hub 201 without the encapsulating toroidal portion 259. The outer periphery 207 of the disk 205 possesses a plurality of apertures 213 spaced circumferentially about the disk. In the present embodiment, when the outer toroidal portion is molded around the periphery 207 of the disk 205, the apertures 213 are embedded within the elastomeric material. During the molding process, the apertures 213 promote the flow of the elastomeric material prior to curing. The apertures 213 also allow the elastomeric material to encircle localized portions of the disk further securing the disk 205 to the toroidal portion 259 of the hub 201. In alternative embodiments the apertures 213 may be present in a different quantity or absent altogether. A central axle aperture 221 may be positioned on the disk 205 to allow for initial alignment of the wheel on a vehicle, such as a vehicle hub. Wheel fastener apertures 209 spaced circumferentially allow the assembled wheel to be securely fastened to the vehicle. While four fastener apertures 209 are shown, it should be understood that the number and/or spacing of the apertures 209 may vary depending upon the application.

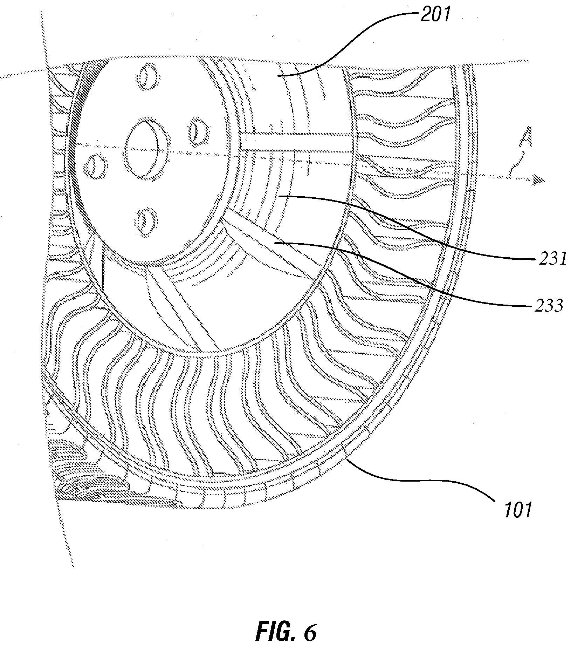

The embodiments illustrated above show a toroidal portion possessing a smooth surface. Alternatively, as shown in Fig. 6, the toroidal portion 259 of the present invention may possess depressions 231 and webs 233 along the central facing surface of the toroidal portion, the central facing surface being along the inside surface 265 and/or outside surface 269, 271 such as shown in Figure 6. It should be understood that as used herein, a "toroidal" shape includes toroidal shapes which may have webbed or cut-out features, or surfaces which are textured or otherwise marked.

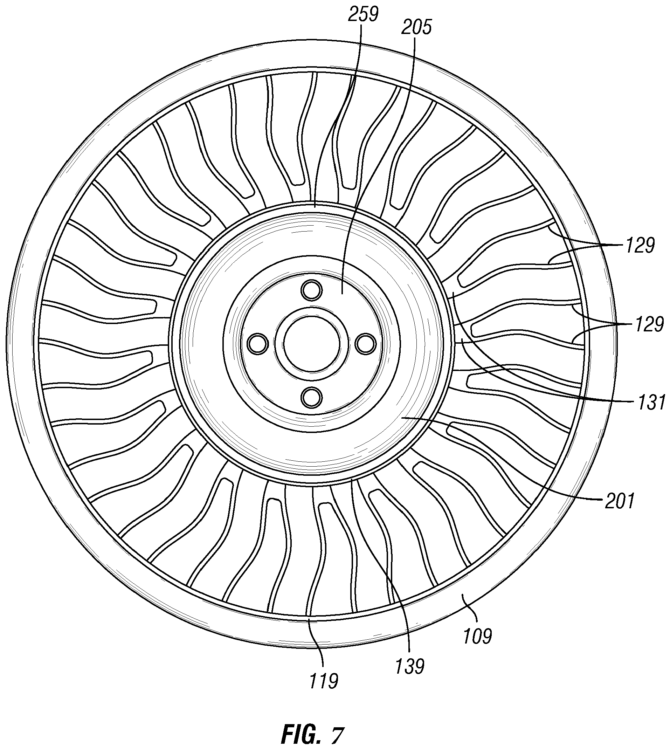

Another embodiment is shown in Fig. 7 wherein each web element 129 of an adjacent pair of web elements 129 is effectively shortened by partially filling the void space adjacent to the hub and between the adjacent web elements 129. This filled area 131 or "rib" increases the stiffness of the hub and increases the torsional stiffness of the wheel.

It should be understood that other web element configurations and geometries may be used within the scope of the invention, including web elements which are interconnected such as where they may form a honeycomb or other pattern.

While the present subject matter has been described in detail with respect to specific exemplary embodiments and methods thereof, it will be appreciated that those skilled in the art, upon attaining an understanding of the foregoing may readily produce alterations to, variations of, and equivalents to such embodiments according to the scope of the appended claims.

## Claims

1. A non-pneumatic structurally supported wheel for a non-pneumatic tire comprising:
a hub portion (201), said hub portion (201) comprising: one mounting disk (205) possessing a generally circular outer periphery (207) and an axially elongated toroidal structure (259) securely mounted concentrically with said mounting disk (205) and encapsulating said outer periphery (207) of said mounting disk (205);
a compliant load supporting band disposed radially outward and concentrically with said hub portion (201);
a plurality of tension based web elements (129) extending between said hub portion (201) and said complainant load supporting band;
wherein said mounting disk (205) possesses a plurality of wheel hub fastener apertures (209) placed in a circular pattern;
wherein said mounting disk (205) is constructed of a material that has a modulus of elasticity greater than the modulus of elasticity of the material used to construct said outer toroidal structure (259).

2. The non-pneumatic structurally supported wheel of claim 1 wherein said plurality of web elements (129) and said toroidal structure (259) are molded as a unitary structure.

3. The non-pneumatic structurally supported wheel of claim 1 or claim 2 further comprising an inner interface band (139) adhered to the outer surface of said toroidal structure (259), said plurality of tension based web elements (129) continuous with said inner interface band (139) and said load supporting band and extending from said inner interface band (139) outward to said compliant load supporting band.

4. The non-pneumatic structurally supported wheel of claim 1 wherein said plurality of web elements (129), said compliant load supporting band and said toroidal structure (259) are molded as a unitary structure.

5. The non-pneumatic structurally supported wheel of claim 2 further comprising an outer interface band (119) adhered to the inner surface of compliant load supporting band, said plurality of tension based web elements (129) continuous with said toroidal interface band and extending to said compliant load supporting band.

6. The non-pneumatic structurally supported wheel of claim 1 further comprising:
an inner interface band (139) adhered to the outer surface of said toroidal structure, said plurality of tension based web elements (129) continuous with said inner interface band (139); and
an outer interface band (119) adhered to the inner surface of compliant load supporting band, said plurality of tension based web elements (129) continuous with said toroidal interface band and
extending to said compliant load supporting band.

7. The non-pneumatic structurally supported wheel of claim 1, 3, or 6 wherein said the material of said toroidal portion (259) possesses a different modulus of elasticity than the material of said web elements (129).

8. The non-pneumatic structurally supported wheel of claim 1, 2, 3, 4 or, 6 wherein said inner mounting disk possesses a plurality of apertures (213) spaced circumferentially and positioned near the outer periphery of said mounting disk and said toroidal portion (259) envelopes said plurality of apertures (213), said toroidal portion (259) encircling localized portions of the disk (205).

9. A non-pneumatic structurally supported wheel for a non-pneumatic tire comprising:
a hub portion (201), said hub portion (201) comprising: one mounting disk (205) possessing a generally circular outer periphery and an axially elongated toroidal structure (259) securely mounted concentrically with said mounting disk (205) and encapsulating said outer periphery of said mounting disk (205);
a compliant load supporting band disposed radially outward and concentrically with said hub portion (201);
an interface band (119, 139) adhered to the inner surface of said compliant load supporting band;
a plurality of tension based web elements (129) continuous with and extending between said toroidal portion (259) and said interface band (119, 139);
wherein said mounting disk (205) possesses a plurality of wheel hub fastener apertures (209) placed in a circular pattern;
wherein said mounting disk (205) is constructed of a material that has a modulus of elasticity greater than the modulus of elasticity of the material used to construct said outer toroidal structure (259) wherein said plurality of web elements (129) and said toroidal structure (259) are molded as a unitary structure.

10. The non-pneumatic structurally supported wheel of claim 1, 2, 3, 4, 6 or 9 wherein said inner mounting disk (205) is substantially flat.

11. The non-pneumatic structurally supported wheel of claim 10 wherein at least a portion of said outer periphery of said hub portion (201) is bent in an axial direction.

12. The non-pneumatic structurally supported wheel of claim 11 wherein said hub portion (201) is constructed from a stamped metal sheet.

13. The non-pneumatic structurally supported wheel of any of the above claims wherein said toroidal portion (259) possesses a plurality of webs (233) on the central facing surface of said toroidal portion (259).

14. The non-pneumatic structurally supported wheel of any of the above claims wherein said toroidal portion (259) possesses a plurality of depressions (231) on the central facing surface of said toroidal portion (259).

## Patentansprüche

1. Nicht-pneumatisches, selbsttragendes Rad für einen nicht-pneumatischen Reifen, umfassend:
einen Nabenteil (201), wobei der Nabenteil (201) umfasst: eine Montagescheibe (205), die einen allgemein kreisförmigen Außenrand (207) und eine axial langgestreckte toroidförmige Struktur (259) aufweist, die fest konzentrisch an der Montagescheibe (205) montiert ist und den Außenrand (207) der Montagescheibe (205) einkapselt;
ein nachgiebiges lasttragendes Band, das radial nach außen und konzentrisch zum Nabenteil (201) angeordnet ist;
eine Vielzahl von auf Spannung basierenden Stegelementen (129), die sich zwischen dem Nabenteil (201) und dem nachgiebigen Tragband erstrecken;
wobei die Montagescheibe (205) eine Vielzahl von Radnaben-Befestigungsöffnungen (209) aufweist, die in einem kreisförmigen Muster angeordnet sind;
wobei die Montagescheibe (205) aus einem Material hergestellt ist, das einen Elastizitätsmodul aufweist, der größer ist als der Elastizitätsmodul des Materials, das zum Aufbau der äußeren toroidförmigen Struktur (259) verwendet wird.

2. Nicht-pneumatisches, selbsttragendes Rad nach Anspruch 1, bei dem die Vielzahl von Stegelementen (129) und die toroidale Struktur (259) als eine einheitliche Konstruktion geformt sind.

3. Nicht pneumatisches, strukturell abgestütztes Rad nach Anspruch 1 oder Anspruch 2, das ferner ein inneres Grenzflächenband (139) aufweist, das an der Außenfläche der toroidalen Struktur (259) haftet, wobei die Vielzahl von auf Spannung basierenden Stegelementen (129) mit dem inneren Grenzflächenband (139) und dem lasttragenden Band zusammenhängt und sich von dem inneren Grenzflächenband (139) nach außen zu dem nachgiebigen lasttragenden Band erstreckt.

4. Nicht-pneumatisches, selbsttragendes Rad nach Anspruch 1, bei dem die Vielzahl von Stegelementen (129), das nachgiebige lasttragende Band und die toroidale Struktur (259) als eine einheitliche Konstruktion geformt sind.

5. Nicht-pneumatisches, selbsttragendes Rad nach Anspruch 2, das ferner ein äußeres Grenzflächenband (119) aufweist, das an der Innenfläche eines nachgiebigen, lasttragenden Bandes haftet, wobei die mehreren auf Spannung basierenden Stegelemente (129) mit dem ringförmigen Grenzflächenband zusammenhängen und sich bis zu dem nachgiebigen, lasttragenden Band erstrecken.

6. Nicht-pneumatisches, selbsttragendes Rad von Anspruch 1, das ferner umfasst: ein inneres Grenzflächenband (139), das an der Außenfläche der toroidalen Struktur haftet, wobei die Vielzahl von spannungsbasierten Bahnelementen (129) mit dem inneren Grenzflächenband (139) zusammenhängt; und ein äußeres Grenzflächenband (119), das an der Innenfläche des nachgiebigen lasttragenden Bandes haftet, wobei die Vielzahl von auf Spannung basierenden Stegelementen (129) mit dem ringförmigen Grenzflächenband zusammenhängt und sich bis zum nachgiebigen lasttragenden Band erstreckt.

7. Nicht-pneumatisches, selbsttragendes Rad nach Anspruch 1, 3 oder 6, wobei das Material des toroidalen Teils (259) einen anderen Elastizitätsmodul als das Material der Stegelemente (129) besitzt.

8. Nicht-pneumatisches, selbsttragendes Rad nach Anspruch 1, 2, 3, 4 oder 6, wobei die innere Montagescheibe eine Vielzahl von Öffnungen (213) aufweist, die in Umfangsrichtung mit Abstand zueinander und nahe dem äußeren Umfang der Montagescheibe angeordnet sind, und der toroidale Abschnitt (259) die Vielzahl von Öffnungen (213) umgibt, wobei der toroidale Abschnitt (259) örtlich begrenzte Abschnitte der Scheibe (205) umgibt.

9. Nicht-pneumatisches, selbsttragendes Rad für einen nicht-pneumatischen Reifen, umfassend:
einen Nabenteil (201), wobei der Nabenteil (201) umfasst: eine Montagescheibe (205), die einen allgemein kreisförmigen Außenrand und eine axial langgestreckte toroidale Struktur (259) aufweist, die fest konzentrisch an der Montagescheibe (205) montiert ist und den Außenrand der Montagescheibe (205) umschließt;
ein nachgiebiges lasttragendes Band, das radial nach außen und konzentrisch zum Nabenteil (201) angeordnet ist;
ein Grenzflächenband (119, 139), das an der Innenfläche des genannten nachgiebigen Tragbandes haftet;
eine Vielzahl von auf Spannung basierenden Stegelementen (129), die mit dem ringförmigen Abschnitt (259) und dem Schnittstellenband (119, 139) zusammenhängen und sich zwischen diesen erstrecken;
wobei die Montagescheibe (205) eine Vielzahl von Radnaben-Befestigungsöffnungen (209) aufweist, die in einem kreisförmigen Muster angeordnet sind;
wobei die Montagescheibe (205) aus einem Material hergestellt ist, das einen Elastizitätsmodul aufweist, der größer ist als der Elastizitätsmodul des Materials ist, das zum Aufbau der äußeren toroidalen Struktur (259) verwendet wird, wobei die Vielzahl von Stegelementen (129) und die toroidale Struktur (259) als eine einheitliche Konstruktion geformt sind.

10. Nicht-pneumatisches, selbsttragendes Rad nach Anspruch 1, 2, 3, 4, 6 oder 9, wobei die innere Montagescheibe (205) im Wesentlichen flach ist.

11. Nicht-pneumatisches, selbsttragendes Rad nach Anspruch 10, wobei mindestens ein Teil des Außenrandes des Nabenteils (201) in axialer Richtung gebogen ist.

12. Nicht pneumatisches, selbsttragendes Rad nach Anspruch 11, bei dem der Nabenteil (201) aus einem gestanzten Metallblech hergestellt ist.

13. Nicht-pneumatisches, selbsttragendes Rad nach einem der obigen Ansprüche, wobei der toroidale Abschnitt (259) eine Vielzahl von Stegen (233) auf der zentralen, gegenüberliegenden Oberfläche des toroidalen Abschnitts (259) aufweist.

14. Nicht-pneumatisches, selbsttragendes Rad nach einem der obigen Ansprüche, wobei der toroidale Abschnitt (259) eine Vielzahl von Vertiefungen (231) auf der zentralen, gegenüberliegenden Oberfläche des toroidalen Abschnitts (259) aufweist.

## Revendications

1. Roue non pneumatique supportée structurellement pour un pneu non pneumatique comprenant :
une partie de moyeu (201), ladite partie de moyeu (201) comprenant un disque de montage (205) possédant une périphérie extérieure (207) globalement circulaire et une structure toroïdale (259) allongée axialement montée fixement concentriquement avec ledit disque de montage (205) et enveloppant ladite périphérie extérieure (207) dudit disque de montage (205) ;
une bande de support de charge élastique disposée radialement à l'extérieur de et concentriquement avec ladite partie de moyeu (201) ;
une pluralité d'éléments de bande (129) fonctionnant en tension s'étendant entre ladite partie de moyeu (201) et ladite bande de support de charge élastique ;
dans lequel ledit disque de montage (205) possède une pluralité d'ouvertures de fixation de moyeu de roue (209) disposées dans un motif circulaire ;
dans lequel ledit disque de montage (205) est fait d'un matériau qui a un module d'élasticité supérieur au module d'élasticité du matériau utilisé pour fabriquer ladite structure toroïdale (259) extérieure.

2. Roue non pneumatique supportée structurellement selon la revendication 1 dans laquelle ladite pluralité d'éléments de bande (129) et ladite structure toroïdale (259) sont moulés comme une structure unitaire.

3. Roue non pneumatique supportée structurellement selon la revendication 1 ou la revendication 2 comprenant en outre une bande d'interface intérieure (139) collée sur la surface extérieure de ladite structure toroïdale (259), ladite pluralité d'éléments de bande (129) fonctionnant en tension étant continus avec ladite bande d'interface intérieure (139) et ladite bande de support de charge et s'étendant depuis ladite bande d'interface intérieure (139) vers l'extérieur vers ladite bande de support de charge élastique.

4. Roue non pneumatique supportée structurellement selon la revendication 1 dans laquelle ladite pluralité d'éléments de bande (129), ladite bande de support de charge élastique et ladite structure toroïdale (259) sont moulés comme une structure unitaire.

5. Roue non pneumatique supportée structurellement selon la revendication 2 comprenant en outre une bande d'interface extérieure (119) collée sur la surface intérieure de la bande de support de charge élastique, ladite pluralité d'éléments de bande (129) fonctionnant en tension étant continus avec ladite bande d'interface toroïdale et s'étendant vers ladite bande de support de charge élastique.

6. Roue non pneumatique supportée structurellement selon la revendication 1 comprenant en outre une bande d'interface intérieure (139) collée sur la surface extérieure de ladite structure toroïdale, ladite pluralité d'éléments de bande (129) étant continus avec ladite bande d'interface intérieure (139) ; et
une bande d'interface extérieure (119) collée sur la surface intérieure de la bande de support de charge élastique, ladite pluralité d'éléments de bande (129) fonctionnant en tension étant continus avec ladite bande d'interface toroïdale et s'étendant vers ladite bande de support de charge élastique.

7. Roue non pneumatique supportée structurellement selon la revendication 1, 3, ou 6 dans laquelle ledit matériau de ladite partie toroïdale (259) possède un module d'élasticité différent de celui du matériau desdits éléments de bande (129).

8. Roue non pneumatique supportée structurellement selon la revendication 1, 2, 3, 4 ou, 6 dans laquelle ledit disque de montage intérieur possède une pluralité d'ouvertures (213) espacées circonférentiellement et positionnées près de la périphérie extérieure dudit disque de montage et ladite partie toroïdale (259) enveloppe ladite pluralité d'ouvertures (213), ladite partie toroïdale (259) encerclant des parties localisées du disque (205).

9. Roue non pneumatique supportée structurellement pour un pneu non pneumatique comprenant :
une partie de moyeu (201), ladite partie de moyeu (201) comprenant ; un disque de montage (205) possédant une périphérie extérieure globalement circulaire et une structure toroïdale (259) allongée axialement montée fixement concentriquement avec ledit disque de montage (205) et enveloppant ladite périphérie extérieure dudit disque de montage (205) ;
une bande de support de charge élastique disposée radialement à l'extérieur de et concentriquement avec ladite partie de moyeu (201) ;
une bande d'interface (119, 139) collée sur la surface intérieure de ladite bande de support de charge élastique ;
une pluralité d'éléments de bande (129) fonctionnant en tension continus avec et s'étendant entre ladite partie toroïdale (259) et ladite bande d'interface (119, 139) ;
dans lequel ledit disque de montage (205) possède une pluralité d'ouvertures de fixation de moyeu de roue (209) disposées dans un motif circulaire ;
dans lequel ledit disque de montage (205) est fait d'un matériau qui a un module d'élasticité supérieur au module d'élasticité du matériau utilisé pour fabriquer ladite structure toroïdale (259) extérieure dans laquelle ladite pluralité d'éléments de bande (129) et ladite structure toroïdale (259) sont moulés comme une structure unitaire.

10. Roue non pneumatique supportée structurellement selon la revendication 1, 2, 3, 4, 6 ou 9 dans laquelle ledit disque de montage (205) est sensiblement plat.

11. Roue non pneumatique supportée structurellement selon la revendication 10 dans laquelle au moins une partie de ladite" périphérie extérieure de ladite partie de moyeu (201) est courbée dans une direction axiale.

12. Roue non pneumatique supportée structurellement selon la revendication 11 dans laquelle ladite partie de moyeu (201) est fabriquée à partir d'une tôle métallique estampée.

13. Roue non pneumatique supportée structurellement selon l'une quelconque des revendications précédentes dans laquelle ladite partie toroïdale (259) possède une pluralité de bandes (233) sur la surface faisant face au centre de ladite partie toroïdale (259).

14. Roue non pneumatique supportée structurellement selon l'une quelconque des revendications précédentes dans laquelle ladite partie toroïdale (259) possède une pluralité de dépressions (231) sur la surface faisant face au centre de ladite partie toroïdale (259).
